# EUROPEAN PATENT APPLICATION

(11) **EP 0 582 287 A2**
(43) Date of publication of application: **09.02.1994**
(21) Application number: 93112493.7
(22) Date of filing: 04.08.1993
(51) Int. Cl.: H05B 37/02, H05B 37/03, H02J 13/00

(54) **On-off and intensity remote control of lighting systems by means of power line carrier waves**

(30) Priority: 07.08.1992 IT MI921966
(71) Applicant: SMEASIT S.r.l., I-70026 Modugno (Bari) (IT)
(72) Inventor: Sardella, Salvatore, I-80100 Napoli (IT); Gentile, Nicola, I-70125 Bari (IT)
(74) Representative: Modiano, Guido, Dr.-Ing.

(57) **Abstract**

Device for the remote adjustment of the absorbed power and therefore of the luminous flux, and for the switching on and off of each individual lamp in series- or parallel-powered lighting circuits, including means suitable to check, by detecting the state of the lamp, the outcome of the commands issued and to also perform auto-diagnostics. The device comprises a programmable controller and a device associated with each lamp. In the case of series systems, the device powers itself by drawing current through a probe without direct contact with the power supply cable.

## Description

The present invention relates to a device for improving the efficiency of lighting systems with series or parallel power supply, such as those meant, for example, for public lighting, sports complexes, urban highways, and so forth, and is particularly aimed at energy saving and at reducing the maintenance costs of such systems.

Power adjustment systems are already commercially known. However, they are constituted by regulators of considerable power which are concentrated and centralized in the electrical distribution cabinets. Accordingly, they do not ensure control of each individual lamp.

Systems are also known which provide adjustment for each individual lamp, but not switching on or off after detecting the state of the lamp. They furthermore require the use of an additional cable for adjustment and are therefore scarcely practical for use in existing and functioning systems.

Considering that, as known, the duration of a lamp for public lighting essentially depends on the "stability" of its power supply voltage, the present invention provides a device which substantially eliminates the drawbacks of hitherto known solutions and not only adjusts the power of each individual lamp but also stabilizes the operating voltage, thus considerably increasing the duration of the lamp.

An object of the invention is to ensure energy saving through power adjustment, reducing the light flux of the lamp in the switched-on periods during which less lighting than the maximum design value of the systems is sufficient (e.g. on roads, during certain low-traffic night periods; in tunnels; in sports facilities, according to the time at which the events actually take place; in systems related to tourist and cultural sites and structures, etc.).

According to an essential characteristic of the invention, each of the devices associated with each lamp has its own code and is cyclically queried, by means of power-line carrier waves, by the control unit. The result of the query informs the control unit as to the state of efficiency of the device and thus of the lamp. If the device is operating and the lamp is on, the control unit sends commands which can cause the gradual adjustment of the brightness of the lamp or switch it off completely.

If the lamp has been switched off by a previous command, the control unit can switch it on.

Substantially, therefore, the above aim, as well as the objects mentioned and others which will become apparent hereinafter are achieved by a device for the remote adjustment of the luminous output of each individual lamp and for the remote control of its switching on and off in series- or parallel-powered lighting systems, characterized in that each lamp is provided with: first power supply means, suitable to draw a preset fraction of the power flowing along said power supply line; control means, suitable to perform state and functionality checking; transmission/reception means, suitable to acquire control signals transmitted along said line, to operate said first power supply means and said control means, and to transmit feedback signals to a control center. For series systems, the device associated with the lamp is self-powered by current drawn by means of a particular probe without direct contact with the power supply cable.

Further characteristics and advantages of the present invention will become apparent from the following detailed description of a preferred but not exclusive embodiment of a device for the remote adjustment of the power of each individual lamp and for the remote control of its switching on and off, according to the invention, illustrated only by way of non-limitative example in the accompanying drawings, wherein:
figure 1 is a general diagram of a device according to the invention;
figure 2 is a conceptual diagram of the device according to the invention for series portions;
figure 3 is a conceptual diagram of the device according to the invention for branched portions;
figure 4 is a block diagram of the control device of an individual lamp;
figures 5, 6, 7 and 8 are parts of a detailed block diagram of the device of figure 4.

The device is usable in lighting systems in the most generic sense, of the kind with series (5) and branched (5a) power supply, with any kind of lamp used and with any power rating (2,42).

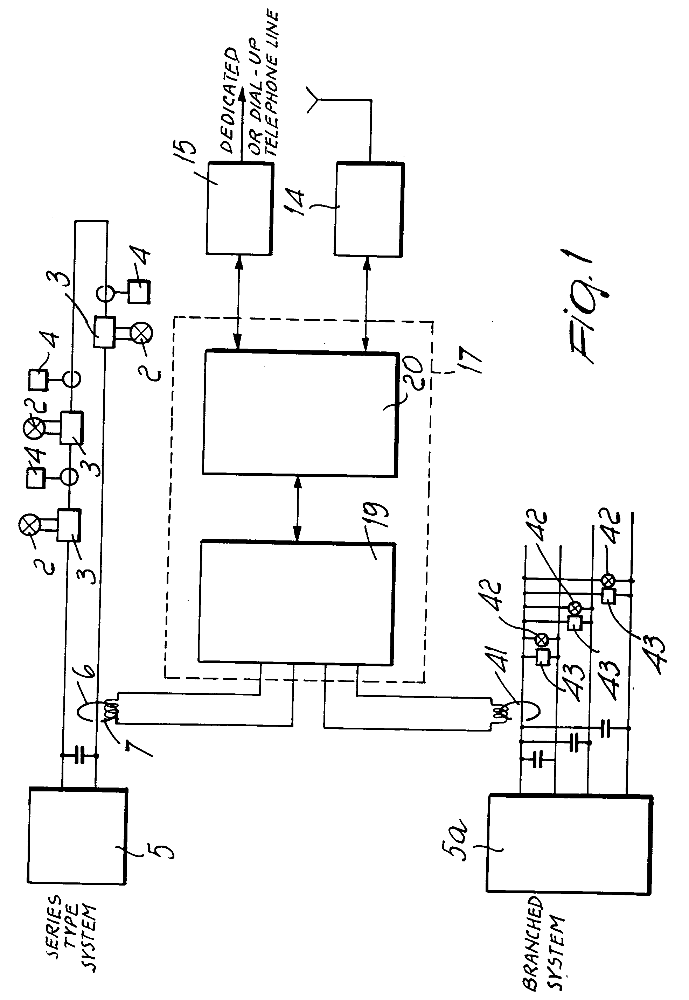

As can be deduced from the diagram of figure 1, the device includes:
-- an intelligent microprocessor-based peripheral unit (17);
-- a modem for dial-up or dedicated telephone line (15);
-- a radio link (14) (as a possible communications medium, alternative to the preceding one);
-- a toroidal transformer system (6,41) for transmission/reception on the power supply line of the system;
-- control and adjustment devices (4,43), up to a maximum number of 1024 per peripheral unit.

### -- PERIPHERAL UNIT

The peripheral unit essentially comprises:
-- a microprocessor-based control unit (20):
-- a modem and radio link interface;
-- a power supply line interface (19);

The microprocessor-based control unit dialogs with an operations center, to which connection can occur by means of a modem usable on a dedicated or dial-up telephone line.

The unit is configured from the operations center and then instructs the devices connected along the line as to the operations they must perform, namely:
-- adjustment of the light flux;
-- lamp switching on and off;
-- detection of the status of the luminaire as a whole.

The peripheral unit then sequentially queries all the devices connected to the system.

Following the responses it receives and after appropriate software filtering operations, results are processed and stored in a local storage system (memory) and are then sent, on request, to the operations center.

The unit is furthermore provided with an internal auto-diagnostics program which, in case of abnormalities in the device querying circuits, by means of a modem or a radio link, spontaneously reports the detected fault to the operations center.

The power supply line interface unit (19) transmits and receives a high-frequency signal by means of toroidal transformers which are closed or open but in any case such as to avoid sectioning the power supply cables of the system. As shown in figure 1, this system is suitable for series and branched systems.

### -- ADJUSTMENT AND CONTROL DEVICE

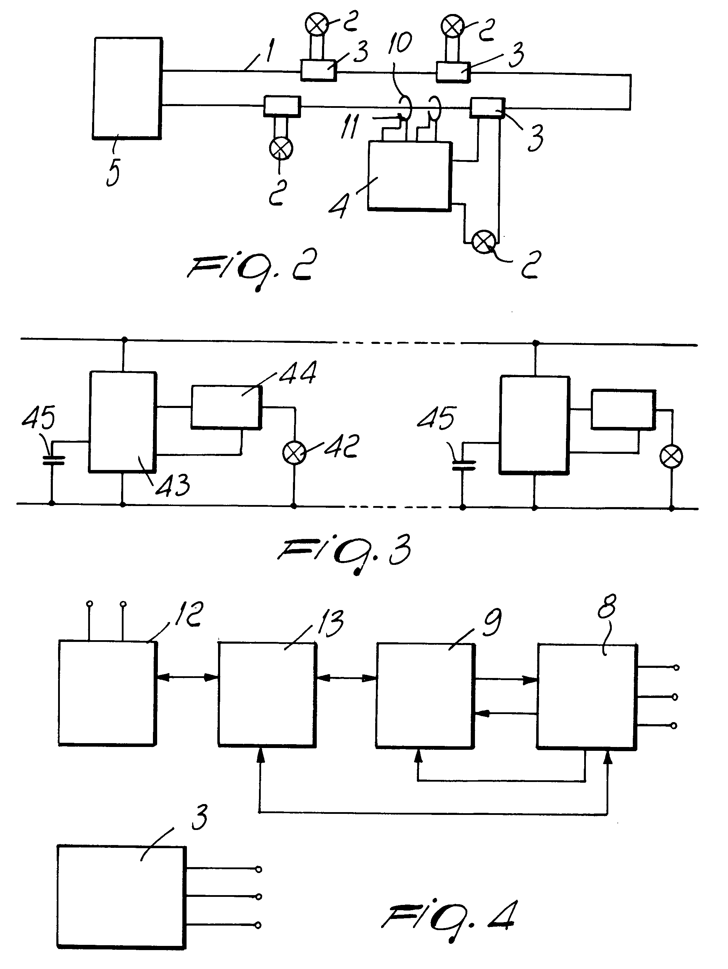

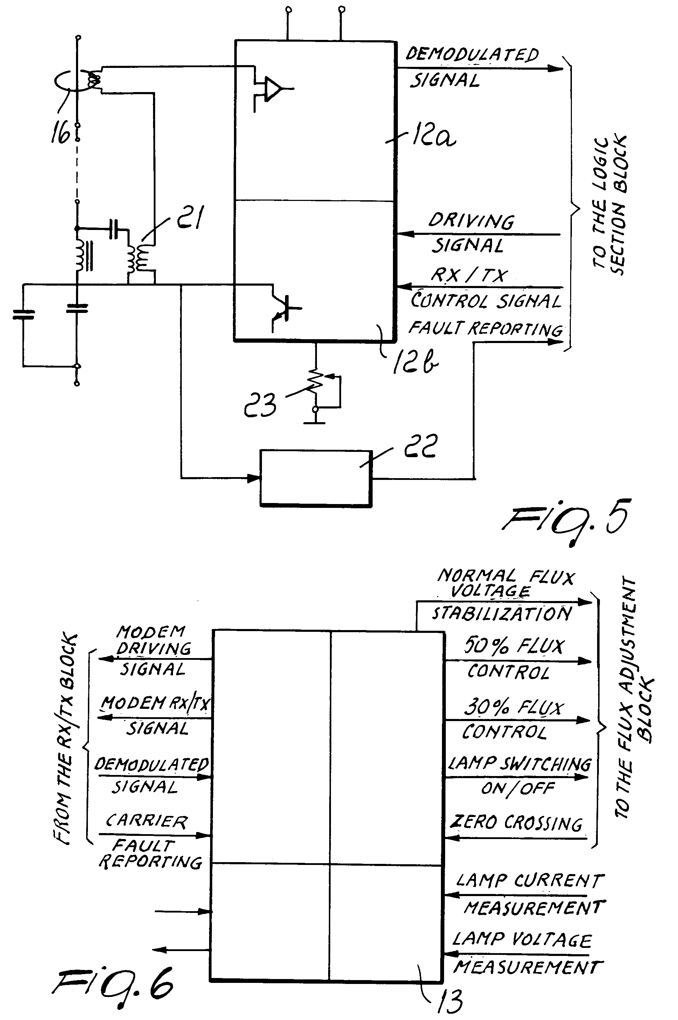

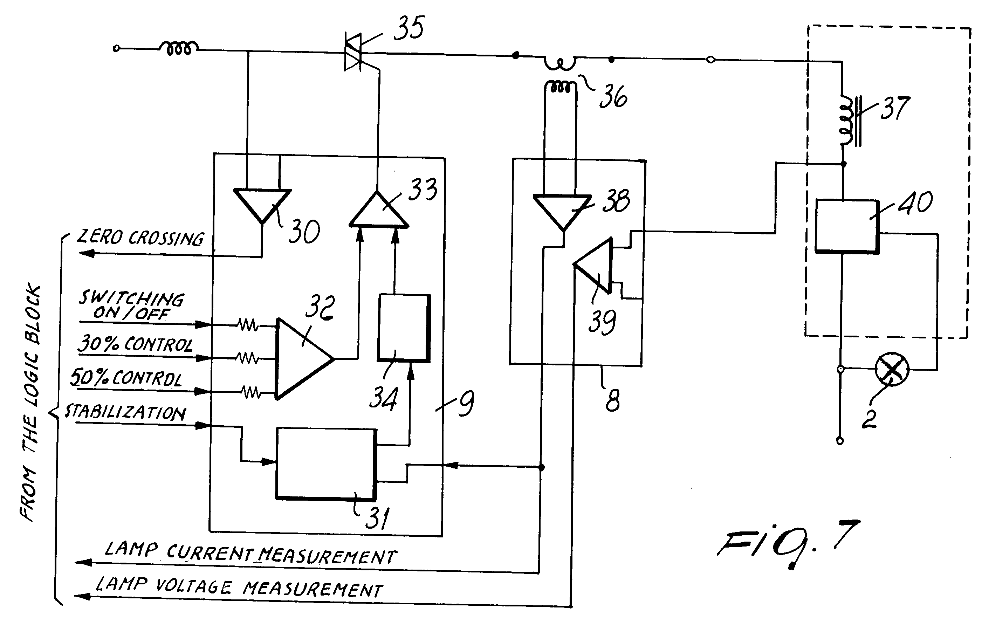

As shown by figures 2 and 3, the device is usable in series and branched systems. In the case of series systems, the device is powered directly by the cable of the system to which it is connected by means of an openable transformer, with no interruption of said cable. In the case of branched systems, it is directly connected to the power supply line. The block diagram of figure 4 shows that it is constituted by:
-- an RX/TX block (12)
-- a logic section block (13)
-- a flow adjustment block (9)
-- a lamp status detection block (8)
-- a power supply block (3)

### a) RX/TX BLOCK

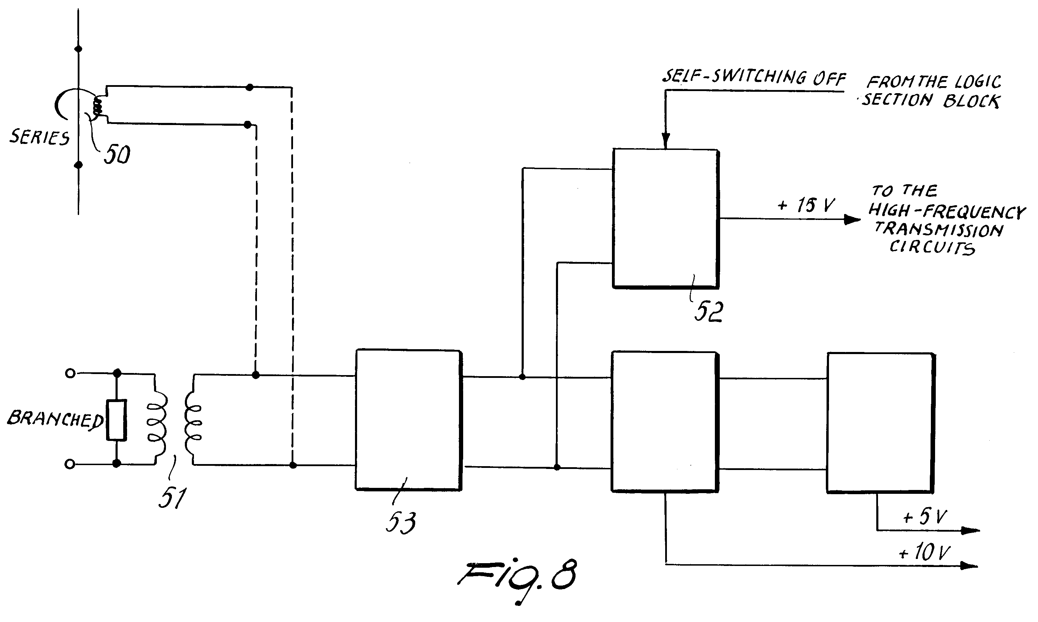

As shown by figure 5, this block includes two circuits for connection to the system being controlled. The first circuit is constituted by the toroidal transformer (16) which has an openable ferrite core and is inserted on the power supply cable of the series system. The high-frequency signal is transmitted and received by means of the winding.

The second circuit is constituted by an inductance coil, by phase advancement capacitors and by a ferrite-core transformer, and is connected to branched systems at the line terminals.

The signal is transmitted and received by means of the ferrite-core transformer (21).

An FM carrier fault detector circuit (22) is connected directly to these two circuits and detects any abnormality which might occur during transmission of the high-frequency signal transmitted by the device, furthermore checking its exact timing. Any fault signal detected is reported to the microprocessor of the logic section block (13) (figure 6).

Another circuit comprised within this block is the modem circuit, constituted by a receiving section (12a) and by a transmitting section (12b). This circuit exchanges its signals with the microcontroller of the logic section block.

### b) LOGIC SECTION BLOCK

The task of the logic section block (13) is to supervise and control the operation of the entire device. It is essentially constituted by a programmed microcontroller (figure 6) and internally comprises a section of programmable input/output lines, a logic processing unit, an analog/digital conversion section for the voltage and current values to be measured, which arrive from the adjustment and control block (figure 7). It furthermore contains a programmable memory storing the program according to which it must operate and a program to allow its factory testing. It furthermore contains a temporary memory wherein it deposits the operating parameters of the ballast-lamp unit, monitoring them constantly. These parameters are continuously compared with those which the operations center, by means of the peripheral unit (17), sends to the microcontroller during configuration of the device.

The result of this comparison is converted into signals which are continuously sent to the adjustment and control block (figure 7).

The logic section block also checks the operation of the power supply block (figure 8) and deactivates it in case of fault detection in order to avoid interfering with the correct operation of the other devices connected to the system.

### c) FLOW ADJUSTMENT BLOCK AND LAMP STATUS DETECTION BLOCK

This block adjusts the light flux and thus the power supplied to the lamp to be controlled, and detects the state of the lamp, of its ballast and of its phase advancement capacitor. It is constituted by a section (9) for controlling the flux adjustment element (35) (flow adjustment block) and by a section (8) for measuring the operating parameters (lamp status detection block). The inductance coil blocks, toward the power supply line, any noise produced by wave fronts formed by the switching of the flux adjustment element (35). The section driving the triac (35) is constituted by a zero crossing circuit (30), it synchronizes an internal saw-tooth wave generator (34) and reports to the microcontroller (figure 6) the time of each half-period of the sinusoidal wave in which control of the adjustment block must begin. This section furthermore comprises a comparator circuit (33) which, during each half-period of the sinusoidal wave, compares the output of the saw-tooth wave generator with the various control signals sent by the microcontroller.

Finally, the measurement section (8) is constituted by two amplifiers. The amplifier (38) is connected to the secondary winding of the current transformer (36) and amplifies and filters the voltage which is proportional to the current absorbed by the ballast/lamp unit to be controlled. The amplified signal is then sent to the analog/digital conversion section of the microcontroller and to a starting-current hold circuit (31). This circuit controls the correct driving of the triac during the adjustment of the programmed light flux, in order to ensure that a current allowing to maintain starting of the gas in the lamp flows at all times.

The amplifier (39) rectifies and filters the voltage read across the lamp to be controlled and sends it to the analog/digital conversion section of the microcontroller. In this manner, according to the read voltage value, the apparatus diagnoses:
-- whether the lamp is on or off;
-- whether the ballast is interrupted.

According to the value of the current absorbed, compared with the detected voltage value, the apparatus diagnoses:
-- whether there are current voltages in the electromechanical assembly of the luminaire;
-- whether the phase advancement capacitor is "open".

### d) POWER SUPPLY BLOCK

This block is constituted by a power drawing section (see figure 8) wherein a toroidal transformer (50) is openable and made of special metal plates, being thus insertable on the primary power supply cable if the device is used in series systems. The other transformer (51) is a normal power supply transformer and is provided if the device is installed on branched systems.

The alternating voltage arriving from the transformers (50,51) is applied to the rectification and filtering block (53) to make it continuous and is then applied to the block of the controlled regulator (52). This regulator is of the voltage-adjustable type, so that it can be deactivated completely; in this manner, its output is no longer applied to the circuits transmitting the high-frequency signal.

The signal which deactivates the power supply block arrives from the microcontroller of the logic section block. In this block there are also two other regulators which generate a voltage of +10V and +5V respectively which supply the remaining circuitry of the device.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for the remote adjustment of the luminous output of each individual lamp, with related power supply voltage stabilization, and for the remote control of its switching on and off, in series- or parallel-powered lighting systems, characterized in that each lamp is provided with: first power supply means, adapted to draw a preset fraction of the power flowing along the power supply line of said lamps; control means for performing state and functionality checking; transmission/reception means for acquiring control signals transmitted along said line, operating said first power supply means and said control means, and transmitting feedback signals to a control center.

2. Device according to claim 1, characterized in that said control means comprise power supply means for drawing a preset fraction of the circulating power for their own power supply and for the supply of power to said transmission/reception means, and are suitable to control the state of the respective lamp.

3. Device according to claim 1, characterized in that said transmission/reception means comprise means for acquiring signals from said power supply line and converters for converting said signals into commands for said control means, as well as signal forming means for generating report messages which can be sent to said control center.

4. Device according to one or more of the preceding claims, characterized in that said signal forming means selectively comprise radio links and modulators/demodulators which respectively send said reporting messages over radio waves and on telephone lines.

5. Device according to one or more of the preceding claims, characterized in that in series systems the power supply, control and transmission/reception means comprise a system for connection by means of openable toroidal cores which surround the power supply line without interrupting it.

6. Device according to one or more of the preceding claims, characterized in that continuous adjustment of the light flux and control for the switching on and off of the lamps are performed by means of power-line carrier waves with a coding code, which are sent through the same line which supplies power to the lamps.

7. Device according to claim 6, characterized in that there are means for self-switching off in case of detection of an internal fault.
